# EUROPEAN PATENT APPLICATION

(11) **EP 1 120 450 A1**
(43) Date of publication of application: **01.08.2001**
(21) Application number: 00200289.7
(22) Date of filing: 27.01.2000
(51) Int. Cl.: C09J 175/04, C08G 18/42, C09J 175/06

(54) **Hot melt adhesive composition for bonding a locator pin to glass**

(71) Applicant: 3M Innovative Properties Company, St. Paul, Minnesota 55133-3427 (US)
(72) Inventor: Weigl, Stefan, c/o 3M Laboratories (Europe) GmbH, 41453 Neuss (DE); Klein, Gertrud, c/o 3M Laboratories (Europe) GmbH, 41453 Neuss (DE)
(74) Representative: Voortmans, Gilbert J.L.

(57) **Abstract**

The present invention provides an adhesive composition comprising a uniform mixture of components, the components comprising a first and a second thermoplastic polyurethane, the first thermoplastic polyurethane being a thermoplastic polyurethane of which the shear tan δ versus temperature curve approaches infinity at a temperature above 150°C and that has a glass transition temperature of not more than 10°C, the second thermoplastic polyurethane having a softening point of not more than 80°C and the adhesive composition being solid at a temperature of 20°C and being capable of bonding to glass or a ceramic frit layer provided on glass at a temperature between 100°C and 160°C. The present invention further provides a method for bonding a locator pin to a window glass using the adhesive composition and further a locator pin having the adhesive composition.

## Description

### 1. Field of the invention

The adhesive composition of the present invention is a hot melt adhesive composition. The adhesive composition is particularly suitable for bonding locator pins to window glass, e.g. a stationary window of a vehicle. Accordingly, the present invention also relates to a method for attaching locator pins to window glass. The invention also relates to locator pins that comprise the adhesive composition.

### 2. Background of the invention

In the manufacturing of (motor) vehicles, e.g. cars, the stationary windows of the vehicle, may be bonded to a window frame of the vehicle. Bonding is typically done by extruding or otherwise providing a polymeric material at the peripheral edge of a window panel. The window panel may then be placed in the opening. Plastic or metallic pins are often bonded to the window panel near its periphery to help locate the window panel in the frame and/or to hold the window panel in place in the frame while the polymeric material cures to reach the required level of adhesion.

The locator pins are typically bonded to a ceramic frit layer that is commonly associated with window panels of vehicles. The frit layer is generally designed broad enough to conceal the pins. According to US 5,475,956, the pins can be bonded to the ceramic frit layer using a thermoplastic or thermoset adhesive. In particular, this US-patent recommends the use of a thermosetting structural adhesive such as a modified epoxy in film form. However, it has been found that when locator pins are bonded to a frit layer of a vehicle's window with the prior art adhesive, undercutting of the frit layer may occur when the window glass is subjected to a temperature cycle between -40°C and 90°C. Accordingly, the pin with adhesive and frit layer detach from the glass. Similarly, if a pin is bonded directly to the window glass rather then to the frit layer, using the prior art adhesive, the pin detaches during the thermal cycling test from the glass by cratering (i.e. taking away some glass) the glass at the spot where the pin was previously bonded. This phenomenon is hereinafter referred to as cratering.

Accordingly, there was a need to find an alternative adhesive composition that does not have this disadvantage. Such adhesive should desirably exhibit a good bonding strength to glass or a ceramic frit layer provided thereon so as to effectively bond a pin to the glass. Preferably, the adhesive composition maintains a sufficient bonding strength at increased temperatures such that the pins do not easily detach from the glass when the ambient temperature increases. The adhesive composition should preferably also be compatible with existing manufacturing methods for placing glass into a vehicle.

### 3. Summary of the invention.

The present invention provides an adhesive composition comprising a uniform mixture of components, said components comprising a first and a second thermoplastic polyurethane, said first thermoplastic polyurethane being a thermoplastic polyurethane of which the shear tan δ versus temperature approaches infinity at a temperature above 150°C and that has a glass transition temperature of not more than 10°C, said second thermoplastic polyurethane having a softening point of not more than 80°C and said adhesive composition being solid at a temperature of 20°C and being capable of bonding to glass or a ceramic frit layer provided on glass at a temperature between 100°C and 160°C.

The adhesive composition of the invention was found to be effective to bond locator pins of for example metal or plastic to glass substrate or to a frit layer provided on a glass surface as is commonly the case in window glass for vehicles, in particular motor vehicles such as cars. In particular, the use of a combination of the first and second thermoplastic polyurethane provides an adhesive composition that can yield a strong bond between the glass substrate and the locator pin such that the pin bonded to the glass substrate does not fall off during a thermal cycling testing. The adhesive composition is also compatible with existing manufacturing methods and can be used to bond the pin to glass at a temperature between 100°C and 160°C. Preferably, the adhesive composition bonds to glass or a ceramic frit layer provided thereon at a temperature between 130°C and 160°C. Furthermore, the adhesive bond formed generally displays a good 35°C static shear creep and generally has a good impact strength. These latter two properties can however be further improved by adding an adhesion promoter to the adhesive composition as described hereinafter.

Particularly preferred adhesive compositions of the present invention are those that can provide a 35°C static shear creep of at least 15 min., more preferably at least 30 min. and most preferably at least 1 hour when bonding a locator pin to glass. Also, the adhesive composition preferably also provides high impact strengths to a locator pin bonded therewith to a window glass. Preferably, the impact strength is such that it passes the 1 Joule impact test set forth in the examples, more preferably the impact strength is more than 2 Joule.

One feature in the present invention to solve the cratering problem is the use of the first thermoplastic polyurethane that should have a shear tan δ value that approaches infinity at a temperature above 150°C. It is believed that this feature provides the high temperature performance of the adhesive bond formed by the adhesive composition. The shear tan δ versus temperature curve is measured via DMTA as set forth in the examples. Important is also that the first thermoplastic polyurethane has a glass transition temperature of not more than 10°C, preferably not more than 5°C and most preferably not more than 0°C. This feature of the first thermoplastic polyurethane is believed to be a factor for solving the cratering problem. The adhesive composition of the present invention should also contain a second thermoplastic polyurethane that has a softening point of not more than 80°C. This second thermoplastic polyurethane lowers the temperature at which the adhesive composition can be bonded to the glass substrate such that the adhesive composition can be employed safely and compatible with existing manufacturing equipment. By using the second thermoplastic polyurethane, the adhesive composition can be sufficiently softened in the temperature range of 100°C to 160°C to bond a locator pin to glass. Preferably, the second thermoplastic polyurethane also includes functional groups that are capable of adsorbing to glass or are capable of reacting with the glass surface. This will improve the capability of the adhesive composition to bond to glass or to a frit layer provided on the glass surface. Alternatively, this capability may be improved by an adhesion promoter that contains such functional groups. Functional groups capable of adsorbing or reacting with glass include hydroxy groups, acid groups, ester groups and silane groups.

In a further aspect, the present invention provides a method of bonding a pin to a window comprising heating the adhesive composition of any of claims 1 to 10 to a temperature between 100°C and 160°C, attaching said pin to said window glass with said adhesive composition and allowing the thus formed laminate to cool thereby bonding said pin to said window glass.

The invention also provides a locator pin comprising on one surface a layer of an adhesive composition of the invention.

### 4. Brief description of the drawings

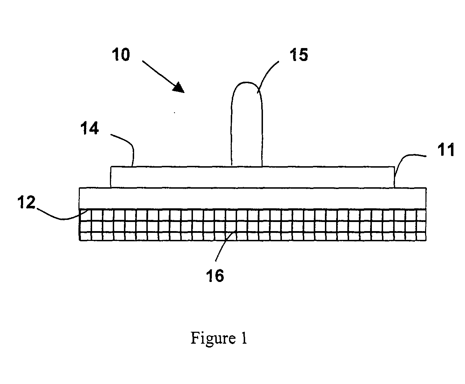

Figure 1 illustrates an embodiment of a locator pin having a layer of the adhesive composition of the present invention attached thereto.

### 5. Detailed description of the invention.

The adhesive composition of the present invention that is used to bond a locator pin to glass or a glass provided with a ceramic frit layer, comprises a uniform mixture of a first and second thermoplastic polyurethane. By the term "uniform mixture" in connection with the present invention is meant that the components of the adhesive composition are well mixed with each other (upon visual inspection) without necessarily being dissolved in each other to form a homogeneous mixture. Accordingly, the term "uniform mixture" comprises both heterogeneous as well as homogeneous mixtures. Typically, the adhesive composition is produced by mixing the components of the adhesive composition in an extruder.

The adhesive composition of the present invention is generally not tacky (i.e. the adhesive composition is not tacky to the touch) once solidified upon cooling. In addition, the adhesive compositions typically do not meet the definition of a pressure sensitive adhesive as established by the Pressure Sensitive Tape Council (PSTC), Glenview, IL. According to the PSTC Glossary of Terms (August, 1985 revision), pressure sensitive adhesives are aggressively and permanently tacky at room temperature and firmly adhere to a wide variety of dissimilar surfaces upon mere contact and without the need for more than finger or hand pressure. They require no activation by water, solvent or heat in order to exert a strong adhesive holding force toward materials such as paper, plastic, glass, wood, cement and metals. They have a sufficiently cohesive holding and elastic nature so that, despite their aggressive tackiness, they can be handled with the fingers and removed from smooth surfaces without leaving a residue.

The adhesive composition of the present invention is solid at a temperature of 20°C and is capable of being bonded to glass or a ceramic frit layer provided on glass at a temperature between 100°C and 160°C so that the adhesive composition can be used to bond a locator pin of for example metal and/or plastic to the glass. Thus, the adhesive composition should be capable of sufficiently softening at a temperature between 100°C and 160°C to wet out the substrate and provide an adhesive bond between the glass or ceramic surface and the locator pin. If the adhesive composition is not capable of being bonded to the glass or ceramic flit layer, the locator pin will after cooling to 20°C fall off when the glass is held in a vertical position.

The thermoplastic polyurethane components of the adhesive composition refer to a polymeric material containing urethane moieties, -NH-COO-, which material possesses thermoplastic processing characteristics. That is, the material softens and flows upon heating so that it can be shaped, and then hardened upon cooling. Upon reheating, the material becomes soft again. The thermoplastic first and second polyurethane of the adhesive composition of the present invention are preferably substantially linear.

The first thermoplastic polyurethane of the composition of the present invention has a shear tan δ value that approaches infinity at a temperature of at least 150°C. The first thermoplastic polyurethane layer further has a glass transition temperature of not more than 10°C. Preferably, the glass transition temperature of the first thermoplastic polyurethane is not more than 5°C and more preferably is 0°C or less. The first thermoplastic polyurethane of the adhesive composition preferably has a Shore A hardness between 75 and 90 and more typically between 80 and 85.
A thermoplastic polyurethane having the desired shear tan δ behaviour and glass transition temperature, can conveniently be obtained from the polycondensation of a polyisocyanate, a polyol and optionally a chain extender. Preferably, the polyol diol comprises a polyether polyol. The polyether polyols useful in the practice of the invention are typically substantially linear compounds corresponding to the general structural formula OH-D-OH and having a hydroxyl functionality of 2.2 or less, preferably 2.0, wherein D represents the organic residue of a polyether linkage. A thermoplastic polyurethane component of desired characteristics may be obtained by employing polyether polyols having a number average molecular weight of at least 500, more preferably at least 800. Highly preferred polyether polyols for producing the first thermoplastic polyurethane are polytetramethylene oxide polyols, which can be obtained from a cationic ring opening polymerization of tetrahydrofuran. Examples of commercially useful polytetramethylene oxide polyols include the POLYMEG™ series from QO Chemicals Inc. (e.g. POLYMEG™ 650, 1000 and 2000), the TERATHANE™ series from E.I. duPont de Nemours and Company (e.g. TERATHAN™ 650, 1000 and 2000), POLYTHF™ from BASF Corp., and combinations or mixtures thereof.

Although polyether polyols are preferred for making the first thermoplastic polyurethane of the present invention, other polyols may be used instead of or in combination with the aforementioned polyether polyols provided the thermoplastic polyurethane so produced has the desired shear tan δ behaviour and glass transition temperature. Other polyols that can be used instead of or in combination with the polyether polyol include polyester based polyols. These polyester polyols are typically substantially linear compounds conforming to the general structure HO-E-OH and have a hydroxy functionality of 2.2 or less, preferably 2.0, wherein E represents the organic residue of a polyester linkage. Alternatively, the polyester polyol can be carboxyl terminated.

The polyisocyanates used to form the thermoplastic polyurethane components of the composition of the invention may be linear or branched, aliphatic, cycloaliphatic, araliphatic, heterocyclic or aromatic, or any combination of such polyisocyanates.

Particularly suitable polyisocyanates correspond to the formula Q(NCO)ₙ wherein n is an integer of from about 2 to about 4, most preferably about 2 so as to yield diisocyanates. An isocyanate functionality of 2.2 or less, more preferably 2.15 or less, and most preferably in the range of 2.0 to 2.1 promotes the formation of a thermoplastic polyurethane component, as opposed to a polyurethane material that would be considered thermosetting. Q is selected from aliphatic hydrocarbon radicals containing from about 2 to about 100 carbon atoms. Q may include cycloaliphatic hydrocarbon radicals, aromatic hydrocarbon radicals or heterocyclic aromatic radicals and araliphatic hydrocarbon radicals. Portions of Q may contain heteroatoms including oxygen, nitrogen, sulfur and halogens.

Examples of polyisocyanates that may be used include ethylene diisocyanate, 1,4-tetramethylene diisocyanate, 1,6-hexamethylene diisocyanate, trimethylhexamethylene diisocyanate, 1,12-dodecane diisocyanate, cyclobutane-1,3-diisocyanate, cyclohexane-1,3 and 1,4-diisocyanate, 1-isocyanato-3,3,5-trimethyl-5-isocyanatomethyl cyclohexane, 2,4-and 2,6-hexahydrototylene diisocyanate, hexahydro-1,3 and-1,4-phenylene diisocyanate, hexahydro-2,4'- and 4,4'-diphenylmethane diisocyanate,1,3-and 1,4-phenylene diisocyanate, 2,4- and 2,6-tolylene diisocyanate, diphenylmethane-2,4'- and 4,4'-diisocyanate, and naphthylene-1,5-diisocyanate. Mixtures of different isocyanates may also be used.

Preferred polyisocyanates include hexamethylene diisocyanate, the isocyanurate and the biuret thereof, 1-isocyanato-3,3,5-trimethyl-5-isocyanatomethyl cyclohexane (isophorone diisocyanate); the tolylene diisocyanates and isocyanurates thereof; the mixed isocyanurate of tolylene diisocyanate and hexamethylene diisocyanate; 4,4'-methylene-bis (cyclohexyl diisocyanate); and the diphenylmethane diisocyanates.

The polymerization mixture from which the thermoplastic polyurethane component is obtained may also include a chain extending agent to produce a thermoplastic polyurethane component of higher molecular weight. Chain extending agents, compounds which carry at least two active hydrogen atoms per molecule, preferably have a molecular weight of from about 52 to below 500, most preferably from about 62 to about 250. Examples of useful chain extending agents are the following: ethylene glycol; propane-1,2-diol; butane-1,4-diol; hexane-1,6-diol; 2-ethyl-1,6-hexanediol; dihydroxyethylurea; terephthalic acid-bis(ß-hydroxyethylamide); hydroquinone-bis-hydroxy-ethyl ether; naphthylene-1,5-bis-hydroxyethyl ether; 1,1-dimethyl-4-(bis-ß-hydroxyethyl)-semicarbazide; succinic acid; adipic acid; isophthalic acid; 1,4-cyclohexanedicarboxylic acid; ethylenediamine; hexamethylenediamine; 1,4-cyclohexanediamine; hexahydro-m-xylene diamine; m-xylylene diamine; p-xylylene diamine; bis(ß-aminoethyl)-oxalamide; piperazine; 2,-dimethylpiperazine; ethanolamine; 6-aminocaproic acid; 4,4-diaminodiphenylmethane; 4,4'-diaminodiphenyldimethylmethane; 2-aminoacetic acid hydrazide; 4-aminobutyric acid hydrazide; 6-aminocaproic acid hydrazide; 2-hydroxy-acetic acid hydrazide; 2-aminobutyric acid hydrazide; 6-hydroxycaproic acid hydrazide; carbodihydrazide; hydracrylic acid dihydrazide; adipic acid dihydrazide; isophthalic acid dihydrazide; m-xylylene dicarboxylic acid dihydrazide; ethylene glycol-bis-cabazinic ester; butanediol-bis-semicarbazide and hexamethylene-bis-semicarbazide.

The use of diamine chain extenders results in the formation of polyurethane/urea materials. At low levels of such chain extenders, the formation of polyurethane segments predominates and the resulting materials may still be regarded as a thermoplastic polyurethane component for use in the invention.

The polymerization mixture for the thermoplastic polyurethane component typically has an isocyanate (NCO) index of about 0.95 to 1.05, more preferably about 1.0 so as to promote the formation of a thermoplastic material rather than a thermosetting polyurethane. The isocyanate index refers to the molar ratio of isocyanate groups to hydroxyl groups in the polymerizable mixture.

The second thermoplastic polyurethane component of the adhesive composition of the invention has a softening point of not more than 80°C, preferably between 40°C and 70°C. Preferably, the second thermoplastic polyurethane component includes functional groups capable of physically adsorbing to glass or a ceramic surface or functional groups that are capable of reacting with a glass or ceramic surface. Examples of such functional groups include hydroxy groups, acid groups such as for example carboxylic acid groups, ester groups and silane groups. Preferably, the second thermoplastic polyurethane component is based on a substantially linear polyester polyol conforming to the formula HO-E-OH, i.e. a hydroxy terminated linear polyester. The second thermoplastic polyurethane component is preferably capable of rapid crystallization when cooled from above its softening point. It has been found that such rapid crystallization of the second thermoplastic polyurethane improves the 35°C static shear creep resistance. Commercially available thermoplastic polyurethane components that can be used as the second thermoplastic polyurethane in the composition of the present invention are for example DESMOCOLL™ 406 and 500 from Bayer Corporation.

The total amount of first and second thermoplastic polyurethane in the adhesive composition is preferably at least 60% by weight relative to the total weight of the composition and more preferably at least 70% by weight and most preferably at least 80% by weight. The first and second thermoplastic polyurethane are typically used in a weight ratio of first to second thermoplastic polyurethane between 30:70 to 45:55.

In a preferred embodiment in connection with the present invention, the adhesive composition additionally comprises an adhesion promoter. By the term "adhesion promoter" in connection with the invention is meant a compound that increases the strength of the adhesive bond relative to the same composition without the adhesion promoter. Examples of adhesion promoters that can be used in connection with the present invention include linear or branched polyesters having a softening point of not more than 120°C, copolymers of ethylene and vinylacetate wherein preferably the amount of vinylacetate is between 5% and 25% by weight based on the total weight of the copolymer and tackifiers. The latter class of compounds is well-known in the field of pressure sensitive adhesives. Examples of tackifiers that can be used in connection with the invention as adhesion promoters include hydrocarbon resins, rosin derivatives (including wood rosin, tall oil, tall oil derivatives, rosin ester rosins, etc.), aliphatic resins such as natural and synthetic terpenes and aromatic or mixed aromatic-aliphatic tackifying resins.

Particularly suitable tackifying resins include both hydrogenated and dehydrogenated rosins and rosin esters such as the methanol, ethylene glycol, di- and triethylene glycols, glycerol, and pentaerythritol esters. Examples of suitable rosins which are commercially available include the glycerol ester of hydrogenated rosin (available under the trade designation "Staybelite™ Ester 10" from Hercules Chemical Co.), pentaerythritol ester of highly hydrogenated rosin (available under the trade designations "Foral™ 85" and "Foral™ 105" from Hercules Chemical Co.), and pentaerythritol ester of rosin (available under the trade designation of "Pentalyn™ A" from Hercules Chemical Co.). Another particularly suitable tackifying resin is a polyketone resin available under the trade designation "Mohawk™ 85" from Mohawk Chemicals).

Representative examples of aliphatic tackifying resins include natural terpene resins, hydrogenated synthetic C₉ resins, hydrogenated synthetic resins, synthetic branched and unbranched C₅ resins, and mixtures thereof. Aliphatic tackifying resins can be made by polymerizing a feed stream containing sufficient aliphatic monomer such that the resulting resin exhibits aliphatic characteristics. Such feed streams can contain other aliphatic unsaturated monomers such as 1,3-butadiene, cis-1,3-pentadiene, trans-1,3-pentadiene, 2-methyl-1,3-butadiene, 2-methyl-2-butene, cyclopentadiene, dicyclopentadiene, terpene monomers, and others. Mixed aliphatic-aromatic resins contain sufficient aromatic monomers and sufficient aliphatic monomers and optionally other C₃ -C₈ unsaturated monomers to produce a resin having both aliphatic and aromatic character. Representative examples of aromatic-aliphatic tackifying resins include styrenated terpene resins, styrenated C₅ resins, or mixtures thereof. Terpene-phenolic resins are also useful tackifying resins. Such resins include Nirez™ V-2040, sold by Arizona Chemical and Piccofyn™ T-125 sold by Hercules.

The adhesion promoter is preferably used in an amount of 1 % by weight and 30 % by weight of the total adhesive composition.

The adhesive composition of the present invention may contain additional ingredients such as organic or inorganic fillers. Particularly preferred fillers include those that are capable of absorbing infrared radiation such that the adhesive composition can be heated by infrared radiation. A particularly preferred filler is carbon black. It has been observed that with the addition of carbon black, the 35°C static shear creep resistance of the composition can be improved. Similar improvements may be obtained with other fillers as well. The amount of filler that can be included in the formulation of the present invention may vary widely but is typically between 0.1% by weight and 10% by weight, more preferably between 0.5% by weight and 2% by weight of the total composition.

According to the present invention, the adhesive composition can be used to bond locator pins to a window glass, for example a stationary window of a vehicle. The window glass may have a ceramic flit layer around its periphery and the locator pins may be bonded thereto with the adhesive composition of the present invention. The locator pins that can be bonded to the window glass are typically of plastic or metal. Examples of plastic locator pins include pins made of acrylonitrile-butadiene-styrene copolymer or pins made of polyamide.

Figure 1 shows a schematic cross-sectional view of one embodiment of a locator pin 10 that can be used in connection with this invention. The locator pin typically has a base plate 11 with a first major side 12 and a second major side 14 opposite thereto. This second major side 14 will have a rod 15 extending therefrom that is shaped and dimensioned to penetrate into a corresponding hole of the window frame during the operation of locating the window in its frame. The rod 15 typically will have a cross-section that is less than the cross-section of the base plate 11 of the locator pin 10.

In accordance with the method of the present invention, the adhesive composition is used to bond the pin to the window glass. This can be accomplished by heating the adhesive composition to a temperature between 100°C and 160°C, preferably between 130°C and 160°C, whereby the adhesive composition softens and can be heat pressed and bonded to the window glass. The laminate thus formed is then allowed to cool.

According to one embodiment, the adhesive composition may be provided in the form of a film typically of a thickness between 200µm and 500µm. It was found that when the adhesive film is too thin, the adhesive bond formed may not display its optimal strength, in particular, the impact strength may be lowered. Also, when the film is too thin, it may not be able to level out some imperfections of the surface of the pin to which the film is applied. On the other hand, increasing the thickness of the film too much may be uneconomical. A particularly preferred thickness of the film is between 350 and 450µm. The adhesive film may be produced by melt extruding a uniform mixture of the adhesive composition or alternatively, the adhesive composition can be dissolved in a solvent and casted on a liner. Locator pins may be bonded to the film by heating the film and pressing the pins against the heated film and thereafter cooling the film. The locator pins may then be cut from the film so as to produce locator pins that have on their first major side 11 opposite to the second major side 14 having the rod 15, an adhesive composition 16 according to the invention (see figure 1). These pins may then be bonded to the glass by heating the glass to a temperature between 100°C and 160°C sufficient to soften the adhesive composition and pressing the locator pin with the adhesive film against the glass surface or ceramic frit layer if provided on the glass. Thereafter, the formed laminate is cooled.

Locator pins with the adhesive composition on them may also be produced by coinjection molding wherein the locator pin is formed and simultaneously provided with the adhesive composition.

Alternatively, the adhesive composition can be applied by a heated gun to either the glass surface or ceramic frit layer provided thereon or to the first major side of the locator pin. A laminate may then be formed by pressing the locator pin against the glass while the adhesive composition is still softened.

The following examples further illustrate the invention without however the intention to limit the invention thereto. All parts and percentages are by weight unless indicated otherwise.

### EXAMPLES

### Test Methods

### Thermal Cycling of Bonded Assembly

One of the two liners was removed from an adhesive sheet as prepared in the examples. The adhesive sheet, supported on one liner, was placed in a forced air oven at 140°. Within 15 minutes, the base plate of a window locator pin was pressed onto the exposed adhesive sheet by hand while the adhesive sheet was still in the oven. The construction was then removed from the oven and allowed to cool to 23° C. A tubular hole-punch was placed over the pin and a circular cut thus made in the adhesive and liner, the circular cut having approximately the same diameter as the base plate of the locator pin.

The glass surface to be bonded was then heated with an infrared lamp to a temperature of 150° C +/- 5°C as measured with a contact thermocouple.

Test were performed on one of two glass substrates:
1. Automotive side window glass (available as 43R-001057 / DOT 27-M23100-AS2 from Sekurit St-Gobain, Aachen, Germany), bearing a dark ceramic frit on one surface of the glass in the perimeter area
2. Float glass - 6 mm thick (size 25 mm x 100 mm) float glass cast onto SnO (available from Glas Schreuer, Neuss, Germany).

Then the locator pin bearing the adhesive layer was pressed onto the heated glass by hand (force of ca. 50 - 100 N). In tests where automotive window glass was employed as the substrate, the locator pin was bonded in the perimeter area where the automotive glass bears a coating of dark ceramic frit. The completed bonded assembly was allowed to cool to 23° C.

The locator pin/ glass assembly was then subjected to thermal cycling. One temperature cycle consisted of exposing the bonded assembly to first 8 hrs at 90° C, then 16 hrs at-40° C, then 8 hrs 38° C and finally 16 hrs at -40° C.

After four complete cycles, the bonded assemblies were evaluated visually for evidence of pin movement and/or cratering of the glass surface near or under the flat circular base plate of the locator pin. The samples were rated as:

| | |
|---|---|
| pass = | no visible change to the bond line, no visible separation of pin from glass frit surface no lateral movement of the pin |
| fail = | visible damage to the bond line |
| | lateral movement of the pin |

Each adhesive was evaluated in three glass/pin constructions.

### Impact Test

### Impact Test (Locator Pins Bonded to Float Glass)

One of the two liners was removed from the adhesive sheet as prepared in the examples. The adhesive sheet, supported on one liner, was placed in a forced air oven at 140°C. Within 15 minutes, the base plate of an ABS window locator pin was pressed onto the exposed adhesive surface by hand while the adhesive sheet was still in the oven. The construction was then removed from the oven and allowed to cool to 23° C. A tubular hole-punch was placed over the pin and a circular cut was thus made in the adhesive sheet and liner, the circle formed by the cut having approximately the same diameter as the base plate of the locator pin.

A section of 6 mm thick (size 25 mm x 100 mm) float glass cast onto SnO (available from Glas Schreuer, Neuss Germany) was heated in a heated platten press to 150° C and the window locator pin bearing the adhesive die-cut was pressed onto the hot glass (SnO side) for 10 sec. using a hand press employing a force corresponding to ca. 200 N. The locator pin was bonded to the glass plate at a distance of 10 mm from one edge.

The impact test was performed according ASTM (American Society of Testing and Materials, Philadelphia, PA/USA) D 950- 98. The test construction was held in a conventional impact tester (available as model TYPE 5102.100/00 from Zwick GmbH & Co., Ulm, Germany). The test was conducted using a falling, weighted pendulum in a manner so the arm impacted at its maximum force against the side of the rod at a point ca. 1 cm above the pin-glass bond line. A weighted pendulum was set to provide an impact of 4 J. Based on the movement of the pendulum past the impact point, the force required to break the adhesive bond was calculated. Five independent measurements were made of five bonded pins, respectively, and the results were averaged.

### Impact Test (Locator Pins Bonded to Automotive Glass)

One liner of the two liners was removed from an adhesive sheet as prepared in the examples. The adhesive sheet, supported by one liner, was placed in a forced air oven at 140°C. Within 15 minutes, the base plate of a window locator pin was pressed onto the exposed adhesive surface by hand while the adhesive sheet was still in the oven. The construction was then removed from the oven and allowed to cool to 23° C. A tubular hole-punch was placed over the pin and a circular cut thus made in the adhesive sheet and liner, the circular cut having approximately the same diameter as the locator pin base plate.

The glass surface to be bonded was heated with an infrared lamp to a temperature of 150° C +/- 5°C as measured with a contact thermocouple. An automotive side window glass (available as 43R-001057 / DOT 27-M23100-AS2 from Sekurit St-Gobain, Aachen, Germany) was employed as the glass substrate. The window had a dark ceramic frit on one surface of the glass in the perimeter area.

Then the pin bearing the adhesive layer was pressed onto the heated glass by hand (force of ca. 50 - 100 N) onto the perimeter area of the glass bearing the dark ceramic frit. The completed construction was allowed to cool to 23° C.

A holding device was created especially for this test as standard impact test equipment cannot effectively hold an entire automotive window glass for testing. Each bonded pin/glass assembly was subjected to a 1 J impact test. Bonds which broke were rated as "fail". Bonds which were not broken on impact were rated "pass".

### 35° C Static Shear Creep

A bonded assembly was prepared by heating a section of 6 mm thick SnO-coated float glass (size 50 mm x 100 mm) to 150° C and then pressing the window locator pin bearing the adhesive die-cut on its base plate onto the hot glass (SnO side) for 10 seconds using a force corresponding to ca. 200 N. The pin was adhered ca. 15 mm from the glass edge.

Alternatively, a bonded assembly was constructed using automotive glass as a substrate. The automotive glass bond assembly was prepared by the same method.

A testing device was constructed using a strong metal spring which, when attached to the rod of the bonded locator pin, exerted a force on the pin in a direction parallel to the bond line. The glass plate was held stationary while force was exerted on the locator pin rod by a metal segment connected to the spring. The metal segment had a hole in it that secured the rod of the locator pin. The force placed on the rod could be calculated using Hooke's Law. The force used in this test was 40 N (spring constant of 4N / mm).

The complete test apparatus and bonded construction were then placed in a 35° C forced air oven. The sample was visually observed every five minutes for failure. The time of failure (minutes) was then recorded. Each adhesive was evaluated at least two times and the results averaged.

### Dynamic Mechanical Thermal Analysis (DMTA)

Circular samples of the polyurethane component having a thickness of about 1 mm and a diameter of 7 mm were cut from an adhesive sheet and evaluated using a dynamic mechanical thermal analysis apparatus (Polymer Laboratories DMTA, Model MK II, available from Rheometrics Scientific, Piscataway, NJ, USA). Plots of storage modulus (G') versus temperature, loss modulus (G") versus temperature, and shear tan δ (delta) (G"/G') versus temperature were measured between -100° C and 200° C using a heating rate of 2° C / min, a frequency of 1 Hz and a strain of 1x = 16 microns.

DMTA can be used to measure the glass transition temperature(s) of a polymer. The temperature at which a peak appears in the shear tan δ plot vs. temperature plot indicates the presence of a glass transition point.

DMTA can also be employed to evaluate the melt behavior of a polymeric material. That temperature at which shear tan δ increases rapidly with temperature and where the slope of the shear tan δ versus temperature plot approaches infinity reflects a temperature at which the polymer has melted and is highly liquid in character. This temperature was taken as the point where the curve intersected the value of 2.0 on the shear tan δ axis.

### Materials Used in the Examples

### Thermoplastic Polyurethanes

DESMOPAN™ KU2-8600 is an aromatic, polyether based thermoplastic polyurethane (available from Bayer Corp., Polymers Division, Pittsburgh, PA, USA) having a Shore D hardness of 31 and a Shore A hardness of 82.

Temperature at which the slope of shear tan δ vs. temperature plot approached infinity: 172° C

The low temperature glass transition (T_{g}) via DMTA method described under Test Methods was- 20.0 ° C.

DESMOPAN™ KU2-8655 is an aromatic, polyether/polyester based thermoplastic polyurethane (available from Bayer Corp., Polymers Division, Pittsburgh, PA, USA) having a shore A hardness of 80.

Temperature at which the slope of shear tan δ vs. temperature plot approached infinity: 189° C.

The low temperature glass transition (T_{g}) via DMTA method described under Test Methods was -19.2 ° C.

DESMOPAN™ KA8443 is an aromatic, polyester based thermoplastic polyurethane (available from Bayer Corp., Polymers Division, Pittsburgh, PA, USA) having a Shore A hardness of 82.

Temperature at which the slope of shear tan δ vs. temperature plot approached infinity: 170° C.

The low temperature glass transition (T_{g}) via DMTA method described under Test Methods was -20.1 ° C.

DESMOPAN™ 481 is an aromatic, polyester based thermoplastic polyurethane (available from Bayer Corp., Polymers Division, Pittsburgh, PA, USA) having a Shore A'hardness of 80.

Temperature at which the slope of shear tan δ vs. temperature plot approached infinity: 187° C.

The low temperature glass transition (T_{g}) via DMTA method described under Test Methods was -17.4 ° C.

DESMOCOLL™ 500 is an aromatic thermoplastic polyurethane (available from Bayer Corp., Polymers Division, Pittsburgh, PA, USA) having a hydroxy polyester soft segment and a Shore A hardness of 97. The softening point (by ASTM D 816) of DESMOCOLL™ 500 is ca. 50° C.

### Resins

DYNAPOL™ S 1402 - slightly crystalline thermoplastic copolyester, softening point (ring and ball) via DIN ISO 4625 of 102° C, melting point via DIN 53 765 of 92° C, OH number > 5.0 (Mg KOH/g), T_{g} via DIN 53 765 of -12°C (available commerically from Creanova, Spezialchemie GmbH, Marl, Germany)

REGALITE™ R-1100, low molecular weight, fully hydrogenated, inert, water-white, C-5 hydrocarbon resin (Hercules International Ltd., Rijswijk, The Netherlands.)

PICCOTAC™ 95-E, aliphatic hydrocarbon resin (Hercules International Ltd., Rijswijk, The Netherlands)

POLYPALE™ resin, pale partially polymerized (dimerized) rosin (Hercules International Ltd., Rijswijk, The Netherlands)

FORAL™ 105 E, very pale thermoplastic ester resin, drop softening point of ca. 105°C (Hercules International Ltd., Rijswijk, The Netherlands)

FORAL™ 85-E, very pale thermoplastic ester resin, drop softening point of ca. 84°C (Hercules International Ltd., Rijswijk, The Netherlands)

WINGTACK PLUS™, aromatic-modified petroleum hydrocarbon resin (Goodyear, Les Ulis, France)

ESCOREZ™ E 1401, cyclic modified aliphatic hydrocarbon resin (Exxon Chemicals, Cologne, Germany)

SURLYN™ 1705-1, ethylene methacrylic acid copolymer (E-MAA) partially neutralized with zinc cation, melt flow index (MFI) of 4.8 (190° C / 2.16 kg), (DuPont, Bad Homburg, Germany)

VESTOPLAST™ 308, amorphous poly -a - olefin (APAO) comprising ethylene, propene and 1-butene) having a density of 0.86 g/cm³, (Degussa-Huels, Marl, Germany).

ELVAX™ 450, ethylene vinyl acetate (EVA) copolymer, 18 % by weight vinyl acetate, melt index (dg/min measured by ASTM D1238) of 8.0, ring and ball softening point measured by ASTM E 28 of 150° C (DuPont, Bad Homburg, Germany).

ELVAX™ 650, ethylene vinyl acetate (EVA) copolymer, 12 % by weight vinyl acetate, melt index (dg/min measured by ASTM D1238) of 8.0, ring and ball softening point measured by ASTM E 28 of 150° C (DuPont, Bad Homburg, Germany).

ELVAX™ 670, ethylene vinyl acetate (EVA) copolymer, 12 % by weight vinyl acetate, melt index (dg/min measured by ASTM D1238) of 0.35, ring and ball softening point measured by ASTM E 28 of 233° C (DuPont, Bad Homburg, Germany).

ELVAX™ 750, ethylene vinyl acetate (EVA) copolymer, 9 % by weight vinyl acetate, melt index (dg/min measured by ASTM D1238) of 7.0, ring and ball softening point measured by ASTM E 28 of 153° C (DuPont, Bad Homburg, Germany).

ELVAX™ 770, ethylene vinyl acetate (EVA) copolymer, 9.5 % by weight vinyl acetate, melt index (dg/min measured by ASTM D1238) of 0.8, ring and ball softening point measured by ASTM E 28 of 227° C (DuPont, Bad Homburg, Germany).

### Other Additives

ALBIS SCHWARZ™ PE/H191.0010, mixture of 45% by weight carbon black in low density polyethylene, calcium carbonate and zinc stearate (Albis Plastics GmbH, Hamburg, Germany)

### Example 1

A thermoplastic polyurethane comprising an aromatic polyisocyanate (DESMOPAN™ KU 2-8600 from Bayer AG, Leverkusen, Germany) in the amount of 36.4 wt. % was combined with a second polyurethane (DESMOCOLL™ 500 from Bayer AG, Leverkusen, Germany) in the amount of 54.5 wt. % and a resin (REGALITE™ R-1100, low molecular weight, fully hydrogenated, inert, water-white, C-5 hydrocarbon resin (Hercules International Ltd., Rijswijk, The Netherlands) in the amount of 9.1 wt. %.

The three materials were combined in an open metal container, heated in a forced air oven at 180° C and stirred occasionally until the mixture well-mixed and uniform in consistency as determined by visual inspection. The hot mixture was then coated between two silicone-coated polyethylene terephthalate (PET) liners using a heated knife coater at a temperature of 120° C. The thickness of the coating was about 350 microns. Chemical composition of the adhesive is summarized in Table 1.

Window locator pins, having a flat circular base plate and a perpendicular rod section extending from the base plate and ending in a tapered head, made of injection molded acrylonitrile-butadiene-styrene (ABS) (available as LUSTRAN™ QE 1455 L2 from Bayer AG, Leverkusen, Germany), were prepared using standard injection molding techniques. The base plate had a diameter of ca. 20 mm and was 3 mm thick. The rod section of the locator pin, perpendicular to the base plate, had a length of 19 mm and a diameter of 8 mm.

The glass surfaces evaluated for pin bonding were 1) the SnO side of SnO-coated float glass and 2) automotive side window glass as described in the Test Methods.

Bonds between plastic locator pins and glass surfaces were prepared by several methods described in the Test Method section, dependent upon the test to be carried out. The bonded assembly was then tested for impact resistance and static shear behavior at 35°C. The bonded assembly was also subjected to a thermal cycling test as described in the Test Method section above. Test results are summarized in Table 2.

### Examples 2-15

The procedures of Example 1 were repeated with the exception that chemical compositions shown in Table 1 were employed.

### Example 16

Desmopan™ KU 2-8600 and Desmocoll™ 500 were melted and mixed together in amounts of 40 wt.% and 60 wt.%, respectively. A film was prepared as in Example 1.

This material passed the Thermal Cycling Test and showed no evidence of cratering along the bond line. The 35° C Static Shear Creep test gave a failure time of greater than one hour. Of five samples tested, two passed the Impact Test (1 J).

### Comparative Example 1

A sheet of adhesive was prepared as in Example 1 using a single low melting polyurethane polymer, Desmocoll™ 500.

Window locator pins were bonded to glass and the assembly was then subjected to temperature cycling test. One segment of the Thermal Cycling Test requires exposure of the assembly to temperatures of 90° C, at which point the adhesive melted and the pin fell from the glass. Thus the samples failed the test, but not due to cratering which appears to be caused largely by exposure to low temperatures.

Comparative Example 1 was also subjected to 35° C Static Shear Creep test measurements as described in the Test Methods section. The pins broke away from the glass almost immediately at 35° C, indicating that adhesive based on a low melting polyurethane are not suitable for applications on automobiles to be used where ambient temperatures can reach over 35° C.

### Comparative Example 2

A sheet of adhesive was prepared as in Example 1 using a single, high-melting thermoplastic polyurethane, Desmopan™ KU2-8600.

Temperatures of up to 180-200° C were required, however, to extrude a sheet of this thermoplastic polyurethane material. Such temperatures would also be required to form an effective bond between glass and the plastic window locator pins. At this temperature, the window glass would be subjected to thermal stresses and the window locator pins would be heated to near or above their softening point.

**Table 1**

| Ex. | Polyurethane 1 | | Polyurethane 2 | | Resin | |
|---|---|---|---|---|---|---|
| | Tradename | Wt. % | Tradename | Wt. % | Tradename | Wt. % |
| 1 | DMP | 36.4 | DMC | 54.5 | Regalite™ R-1100 | 9.1 |
| 2 | DMP | 33.3 | DMC | 50.0 | Regalite™ R-1100 | 16.7 |
| 3 | DMP | 30.8 | DMC | 46.2 | Regalite™ R-1100 | 23.0 |
| 4 | DMP | 38.1 | DMC | 57.1 | Piccotac™ 95-E | 4.8 |
| 5 | DMP | 36.4 | DMC | 54.5 | Piccotac™ 95-E | 9.1 |
| 6 | DMP | 33.3 | DMC | 50.0 | Piccotac™ 95-E | 16.7 |
| 7 | DMP | 30.8 | DMC | 46.2 | Piccotac™ 95-E | 23.0 |
| 8 | DMP | 36.4 | DMC | 54.5 | Polypale™ Resin | 9.1 |
| 9 | DMP | 36.4 | DMC | 54.5 | Foral™ 105 E | 9.1 |
| 10 | DMP | 36.4 | DMC | 54.5 | Foral™ 85 | 9.1 |
| 11 | DMP | 38.1 | DMC | 57.1 | Wingtack Plus™ | 4.8 |
| 12 | DMP | 36.4 | DMC | 54.5 | Wingtack Plus™ | 9.1 |
| 13 | DMP | 33.3 | DMC | 50.0 | Wingtack Plus™ | 16.7 |
| 14 | DMP | 30.8 | DMC | 46.2 | Wingtack Plus™ | 23.0 |
| 15 | DMP | 36.4 | DMC | 54.5 | Escorez™ E 1401 | 9.1 |
| 16 | DMP | 40.0 | DMC | 60.0 | -- | -- |
| C1 | -- | -- | DMC | 100 | -- | -- |
| C2 | DMP | 100 | -- | -- | -- | -- |
| DMP= Desmopan™ KU2-8600 | | | | | | |
| DMC= Desmocoll™ 500 | | | | | | |

**Table 2**

| Example | Impact Test (1), 4 J | 35°C Static Shear Creep, min | Thermal Cycling Test (2) |
|---|---|---|---|
| 1 | 2.6 | 75 (1) | Pass |
| 2 | 3.9 | 93 (1) | Pass |
| 3 | 3.3 | > 150 (1) | Pass |
| 4 | 0.8 | 59 (1) | Pass |
| 5 | 1.5 | 83 (1) | Pass |
| 6 | 2.4 | 59 (1) | Pass |
| 7 | 1.8 | 53 (1) | Pass |
| 8 | 1.8 | > 60, < 960 (2) | Pass |
| 9 | 2.7 | > 960 (2) | Pass |
| 10 | 0.4 | > 960 (2) | Pass |
| 11 | 1.5 | 70 (1) | Pass |
| 12 | 1.2 | 36 (1) | Pass |
| 13 | 2.6 | 36 (1) | Pass |
| 14 | 1.6 | 46 (1) | Pass |
| 15 | 4.0 | > 60, < 960 (2) | Pass |
| 16 | * | > 60(1) | Pass |
| C1 | NT | <1 | Fail |
| C2 | NA | NA | NA |

| | | | |
|---|---|---|---|
| (1) Locator pins bonded to float glass | | | |
| (2) Locator pins bonded to automotive window glass | | | |
| * 2 of 5 samples passed NA Tests not applicable because no bond could be formed because the adhesive did not melt at the desired application temperature NT Not tested | | | |

### Example 17

Desmopan™ KU 2-8600 polyurethane (32.8 wt. %), Desmocoll™ 500 polyurethane (49.2 wt. %), Regalite™ R-1100 resin (16.4 wt. %, pre-melted and fed at 150° C) and 1.6 wt. % of a master batch comprising 45 wt. % carbon black in low density polyethylene (available as ALBIS SCHWARZ™ from Albis Plastics GmbH, Hamburg, Germany) were combined and fed into a twin screw extruder (Type ZSK 25P8.2E from Werner-Pfleiderer, Stuttgart, Germany) having a screw diameter of 25 mm and L/D of 40:1. The extruder output fed into a rotary rod die held at a temperature of ca. 180°C having a single slot.

The hot-melt adhesive composition was extruded onto a siliconized paper liner backed up by a steel roll held at ambient temperature. The black, non-tacky adhesive sheet had a thickness of ca. 350 microns. The cooled adhesive film on the liner was then roll up into a roll.

Die cuts (ca. 20 mm in diameter) were prepared from the adhesive and black ABS locator pins were bonded to the inside surface (frit-bearing surface of an automotive window glass bearing a black ceramic frit coating on portions of the inside surface (43R-001057 / DOT 27-M23100-AS2 from Sekurit). The bonded constructions were then tested. The ABS window locator pin described in Example 1 was bonded to that portion of the window bearing the black ceramic frit layer.

The Temperature Cycling Test performed on bonded assemblies showed no visual evidence of changes in the bond line between the locator pin and the window surface. Other test results are summarized in Table 3 below.

**Table 3**

| Example 17 | Wt. % | Thermal Cycling Test² | Impact Test², 1 J | 35° Static Shear Creep², hrs |
|---|---|---|---|---|
| Desmopan™ KU2-8600 | 32.8 | Pass | Pass | > 20 |
| Desmocoll™ 500 | 49.2 | | | |
| Regalite™ R-1100 | 16.4 | | | |
| Albis Schwarz™ | 1.6 | | | |

| | | | | |
|---|---|---|---|---|
| ² Locator pins bonded to automotive window glass | | | | |

### Example 18

The adhesive composition of Example 17 was fed through a hot-melt adhesive application gun useful for continuous application of adhesives to parts on an assembly line (available from 3M Company in France, FR-95006 Cergy Pontoise Cedex as Polygun ™ EC). A film of extruded adhesive was rolled tightly upon itself and inserted into the heating chamber. The adhesive was forced toward the application outlet using a standard stick of ethylene vinyl acetate (EVA)-based hot-melt adhesive commonly sold with the gun. A small spot of hot adhesive was dispensed onto the flat circular base plate of the ABS window locator pin described in Example 1. The base plate of the locator pin bearing the hot adhesive was then pressed against the heated glass.

### Examples 19-21

Three additional relatively high melting thermoplastic polyurethanes were evaluated in combination with DESMOCOLL™ 500 and REGALITE™ R-1100. Carbon black in polyethylene (1.6 wt. % ALBIS SCHWARZ™ available from Albis Plastics GmbH, Hamburg, Germany) was present in each composition. Chemical compositions of Examples 20-22 (with the exception of carbon black) are summarized in Table 4.

A twin-screw extruder with 19 mm screws and a length/diameter ratio of 40:1 (model MP-2015 bench extruder manufactured by APV Baker, Industrial Extruder Division, Newcastle-under-Lyme, United Kingdom), comprising two mixing sections, was employed to mix the materials and extrude the adhesive sheet. Samples were prepared by feeding solid pellets into the extruder through two gravimetric feeders.

The extruder barrel was divided into seven controllable temperature zones with an eighth zone comprising an end-piece or adapter that could also be varied in temperature. The zones were held at temperatures of 140°, 180°, 199°, 198°, 210°, 215° and 215° C, respectively. The adapter was held at 210° C and the slit die was held at 200° C. The temperature of the hot-melt mass was measured as 217° C.

The black non-tacky sheets having a thickness of ca. 300-350 microns were then bonded to the base plate of window locator pins as described in Example 1 and tested according the methods outlined under Test Methods.

**Table 4**

| Ex. | Polyurethane, wt % | Desmocoll™ 500, wt. % | Regalite™ R-1100, wt. % |
|---|---|---|---|
| 19 | Desmopan™ KU2-8655, 32.8 | 49.2 | 16.4 |
| 20 | Desmopan™ KA 8443, 32.8 | 49.2 | 16.4 |
| 21 | Desmopan™ 481,32.8 | 49.2 | 16.4 |

**Table 5**

| Example | Thermal Cycling Test² | Impact Test², 1 J | 35° Static Shear Creep², hrs |
|---|---|---|---|
| 19 | Pass | Pass | > 7 hours |
| 20 | Pass | Pass | 1-2 hours |
| 21 | Pass | Fail | ca. 0.5 hours |

| | | | |
|---|---|---|---|
| ² Locator pins bonded to automotive window glass | | | |

### Examples 22-27

Example 17 was repeated with the exception that the chemical compositions of Table 6 were employed. Test results are summarized in Table 7.

**Table 6**

| Ex. | Desmopan™ KU-8600, wt. % | Desmocoll™ 500, wt. % | Regalite™ R-1100, wt. % | Albis Schwarz™, wt. % |
|---|---|---|---|---|
| 22 | 29.4 | 51.9 | 17.3 | 1.5 |
| 23 | 35.9 | 46.8 | 15.6 | 1.8 |
| 24 | 30.5 | 52.7 | 15.3 | 1.5 |
| 25 | 35.4 | 45.1 | 17.7 | 1.8 |
| 26 | 32.0 | 47.6 | 18.4 | 1.6 |
| 27 | 33.6 | 50.4 | 14.3 | 1.7 |

**Table 7**

| Ex. | Thermal Cycling Test² | Impact Test², 1 J | 35° Static Shear Creep², hrs |
|---|---|---|---|
| 22 | Pass | + | > 9 |
| 23 | Pass | + | > 9 |
| 24 | Pass | + | >9 |
| 25 | Pass | + | > 9 |
| 26 | Pass | + | >9 |
| 27 | Pass | + | >9 |
| + Pass | | | |

| | | | |
|---|---|---|---|
| ² Locator pins bonded to automotive window glass | | | |

### Examples 28-36

Two thermoplastic polyurethanes were combined with a series of resins, respectively, and extruded as in Examples 19-21. The chemical compositions employed are summarized in Table 8. Test results are summarized in Table 9.

**Table 8**

| Ex. | DESMOPAN™ KU2-8600, wt. % | DESMOCOLL™ 500, wt. % | Resin, wt. % | ALBIS SCHWARZ™, wt. % |
|---|---|---|---|---|
| 28 | 34.8 | 52.2 | SURLYN™ 1705-1, 13.0 | 0 |
| 29 | 34.8 | 52.2 | VESTOPLAST™ 308, 13.0 | 0 |
| 30 | 34.2 | 51.3 | ELVAX™ 450, 12.8 | 1.7 |
| 31 | 34.2 | 51.3 | ELVAX™ 470, 12.8 | 1.7 |
| 32 | 34.2 | 51.3 | ELVAX™ 650, 12.8 | 1.7 |
| 33 | 34.2 | 51.3 | ELVAX™ 670, 12.8 | 1.7 |
| 34 | 34.2 | 51.3 | ELVAX™ 750, 12.8 | 1.7 |
| 35 | 34.2 | 51.3 | ELVAX™ 770, 12.8 | 1.7 |
| 36 | 34.2 | 51.3 | DYNAPOL™ S-1402, 12.8 | 1.7 |

**Table 9**

| Example | Thermal Cycling Test² | Impact Test², 1 J* | 35° C Static Shear Creep², min |
|---|---|---|---|
| 28 | Pass | - | 33 |
| 29 | Pass | - | 47 |
| 30 | Pass | +/- | 73 |
| 31 | Pass | +/- | 70 |
| 32 | Pass | + | 54 |
| 33 | Pass | +/- | 60 |
| 34 | Pass | + | 63 |
| 35 | Pass | +/- | 20 |
| 36 | Pass | + | 104 |

| | | | |
|---|---|---|---|
| ² Locator pins bonded to automotive window glass | | | |
| * Results of two measurements: + pass, - fail, +/- one sample passed, one sample failed | | | |

## Claims

1. An adhesive composition comprising a uniform mixture of components, said components comprising a first and a second thermoplastic polyurethane, said first thermoplastic polyurethane being a thermoplastic polyurethane of which the shear tan δ versus temperature curve approaches infinity at a temperature above 150°C and that has a glass transition temperature of not more than 10°C, said second thermoplastic polyurethane having a softening point of not more than 80°C and said adhesive composition being solid at a temperature of 20°C and being capable of bonding to glass or a ceramic frit layer provided on glass at a temperature between 100°C and 160°C.

2. An adhesive composition according to claim 1 wherein said second thermoplastic polyurethane is capable of crystallization.

3. An adhesive composition according to claim 1 or 2 wherein said second thermoplastic polyurethane contains functional groups capable of physically adsorbing to glass or capable of reacting with a glass surface.

4. An adhesive composition according to claim 3 wherein said functional groups are selected from hydroxy, acid groups, ester groups and silane groups.

5. An adhesive composition according to any of claims 1 to 4 wherein said components further comprise an adhesion promoter.

6. An adhesive composition according to claim 5 wherein said adhesion promoter is selected from the group consisting of a tackifier, a polyester having a melting temperature of not more than 120°C and an ethylene-vinyl acetate resin.

7. An adhesive composition according to any of claims 1 to 6 wherein said components further comprise an organic or an inorganic filler.

8. An adhesive composition according to claim 7 wherein said organic or inorganic filler is carbon black.

9. An adhesive composition according to any of the previous claims wherein said first thermoplastic polyurethane comprises polyether segments.

10. An adhesive composition according to any of the previous claim wherein said adhesive composition is provided in the form of film.

11. A method of bonding a pin to a window glass comprising heating the adhesive composition of any of claims 1 to 10 to a temperature between 100°C and 160°C, attaching said pin to said window glass with said adhesive composition and allowing the thus formed laminate to cool thereby bonding said pin to said window glass.

12. A method according to claim 11 wherein said adhesive composition is applied to said pin prior to bonding said plastic pin to said window glass.

13. A method according to claim 12 wherein said window glass is dimensioned and shaped to form a stationary window of a vehicle.

14. A pin comprising on one surface a layer of an adhesive composition as defined in any of claims 1 to 10.

15. A pin according to claim 14 wherein said pin is a plastic or metallic pin.

16. A pin according to claim 14 wherein said pin is made of an acrylonitrile-butadiene-styrene copolymer.

17. A pin according to any of claims 14 to 16 wherein said plastic pin comprises a base plate having a first major side that is provided with said layer and a second major side opposite thereto that has a rod extending therefrom, said rod having a cross-section that is less than the cross-section of said base plate.
